# EUROPEAN PATENT SPECIFICATION

(11) **EP 2 009 029 B1**
(45) Date of publication and mention of the grant of the patent: **07.11.2012**
(21) Application number: 07466017.6
(22) Date of filing: 28.06.2007
(51) Int. Cl.: C08F 2/52

(54) **Method of realisation of polyreactions, plasma-chemical polyreactions, their modification and modification of macromolecular substances by the plasma jet with a dielectric capillary enlaced by a hollow cathode**
Verfahren zur Durchführung von Polyreaktionen, plasmachemische Polyreaktionen, deren Modifizierung und Modifizierung makromolekularer Substanzen mittels Plasmastrahl mit einer hohlkathodenumwickelten Dielektrizitätskapillare
Procédé pour la réalisation de polyréactions, polyréactions plasma-chimiques, leur modification et la modification de substances macromoléculaires par le jet de plasma avec un capillaire diélectrique entouré d'une cathode creuse

(43) Date of publication of application: 31.12.2008
(73) Proprietor: Masarykova univerzita, 611 37 Brno (CS)
(72) Inventor: Milos, Klima, 612 00 Brno (CZ); Milan, Alberti, 602 00 Brno (CZ); Tomás, Svoboda, 691 76 Sitborice (CZ); Vilma, Bursiková, 628 00 Brno (CZ); Pavel, Slavicek, 664 61 Rajhrad (CZ); Franta, Daniel, 616 00 Brno (CZ); Mazik, Michal, 01863 Ladce (CZ); Hán, Pavel, 641 00 Brno (CZ)
(74) Representative: Musil, Dobroslav

(56) References cited:
- EP-A- 0 282 827
- WO-A-96/20023
- WO-A-99/59385
- WO-A-03/064061
- US-A- 4 729 906

## Description

### Technical field

The invention relates to the method for realisation of polyreactions, plasma-chemical polyreactions, their modification and modification of macromolecular substances through discharge of at least one plasma jet with dielectric capillary having inner diameter of 0,01 - 10 mm, which is enlaced by a hollow cathode connected to the source of electromagnetic energy of a power of 1 to 10³ W/jet, amplitude of voltage in digit position of 10² to 10⁴ V with possibility of its modulation, amplitude of current in digit position of 10⁻² to 10⁰ A/jet and at a frequency range of 1 MHz to microwave, while in vicinity and/or on surface of dielectric capillary there is possibly at least one additional electrode on a different electrical potential than a hollow cathode, while argon flows through the dielectric capillary at a pressure of external environment of 10³ to 10⁶ Pa.

### Background art

In industrial praxis of chemical branches the polyreactions (polymerization, polycondensation) are usually realised by means of chemical or physical methods or their combinations. They are e.g. condensations, radical or ionic reaction, reactions initiated by UV radiation or through various radiation methods or thermal methods.

Generally the polyreactions may be divided to chain and gradual ones. Gradual polyreactions, e.g. polycondensation reactions differ from the chain polyreactions by that the polymerization process may be stopped at any moment and continued later. Depending on initial conditions and course of polyreaction processes there are created macromolecules with linear chains, branched macromolecules or reticulated macromolecules, moreover some of them may crystallise according to the conditions.

At polycondensation the low-molecular product (water, ammoniac, amines ) is liberated during the process of creating the macromolecule (i.e. polycondensate)

At polymerization reactions (i.e. at creation of polymer, not polycondensate) this process does not occur, and after supply of energy to the molecules of monomer the chemical bonds are disintegrated, which causes chaining and netting of energetized particles.

Physical, mechanical and chemical properties of resultant products determine entry conditions of polyreaction, e.g. the type of environment, gaseous, liquid or solid phase, possibly their mixtures, admixtures, used precursors, i.e. initial substances creating or co-creating the resultant product, and also the selected process of polyreaction.

The complexity and variety in technologies of polyreactions may be demonstrated on an example of differences in initiation at individual types of polyreaction processes: e.g. for polycondensation reactions it is necessary to add a sufficient quantity of thermal energy, so that they are started (high threshold value of thermal energy for starting the reaction). At other types of polyreactions this threshold is substantially lower or does not exist. For a number of polyreaction types the concentration of radicals is important, at other types of polyreactions the concentration of free ions is important, .

To reach the highest level of conversion of initial monomers, which are here in a role of precursors, in the resultant high-molecular compounds it is necessary to choose such reaction conditions, so that the unwilling substances are not created. For example at polycondensations it is an endeavour to reduce the content of low-molecular products, like e.g. H₂O, amines, or alcohol . Removal of these low-molecular products is usually done by their distilling off from the reaction environment. For example at elimination of water also the additions of solvents creating azeotropic mixtures with water may be used. By shifting a balance of polyreactions, also the content of required high-molecular products may be increased.

At the same time it is necessary to keep in mind, that the polymer reactions may be reversible, i.e. that together with polymerization the de-polymerization processes may proceed, which are caused e.g. by produced by-products of polymerization or unsuitable thermal conditions. On the contrary destruction of polycondensates not necessarily must lead to production of initial substances. In other already targeted cases the industrial applications are focused to degradation of macromolecules directly, i.e. splitting of chains to smaller units, for which a number of physical and chemical methods may be used, e.g. methods mechanical, thermal, ultrasonic, methods with electromagnetic radiation of a high energy, further also oxidation or hydrolytic splitting .

Due to above mentioned reasons all the time further possibilities for performance of polyreactions, energy transfer for polyreaction processes, for modification of polyreaction processes, degradation of already created macromolecules ., are being sought, this first of all with the goal to create new materials, to attain new properties or eliminate creation of undesired intermediate products and co-products, .

One of such further possibilities in technology of polyreactions is usage of plasma. Approximately in the second half of 20^{th} century, a new branch called plasmatic chemistry or also plasma-chemistry started its development on the border of physics and chemistry. In this branch especially the ability of plasma laying in multichannel energy transfer is being utilised. Chemical reactions are here only one of reaction channels.

In this context, the term plasma-chemical polyreactions for the need of this application may generally be defined so that under the term plasma-chemical polyreactions the chemical polyreactions wide-spread by physical types of transfer of energy by means of plasma and including also the oxidation-reduction processes characterised by electron transfer shall be understood.

At present, usage especially of a low-pressure plasma for plasma-chemical polyreaction processes, e.g. so called PECVD technology , or for modification of surface of macromolecular substances through affecting their chemical and/or physical properties is well known. It is generally presumed, that according to particular used conditions the plasma-chemical technologies, e.g. at applying of macromolecular substances on carriers, create spatially distinctly reticulated structure, so called plasmatic polymers and to plasmatic polymer similar layers or materials. Plasma-chemical technologies may nevertheless provide also compounds, layers or materials, which may be characterised as clusters or organised clusters and layers composed of them. Part of such prepared materials may be included into the sphere of nano-materials, other already into the sphere of micro-materials.

At plasma-chemical polyreactions and at modification of macromolecular substances usually the gaseous precursors i.e. substances creating or co-creating the resultant materials are used as initial materials. In the past for this purpose mostly the low-pressure plasma-chemical reactors with low-pressure discharges were used, but in recent years these technologies are substituted by more effective and economical technologies with surface atmospheric discharges or with local atmospheric sources of plasma, i.e. technologies with plasma jets.

Generally the most frequently utilised types of plasmatic jets are based on principle of blown corona (e.g. instruments of the Ahlbrand firm, so called 3D Treater) of blown pulse arc (e.g. instrument "Plasma Pen" of Jenoptic firm). These plasma jets always have inside the jet both electrodes, i.e. the discharge primarily arises in the space inside the jet between these electrodes, from where it is by a stream of gaseous working medium blown off into the outside environment. It is so called flickering out discharge. That means that the main transfer of energy i.e. the sphere of active discharge, occurs inside the jet only (flow of electric current, absorption of energy by plasma, but also the active generating of free electrons and ions .), where it dissociates and into the higher energetic statuses activates atoms and molecules of flowing working medium. In an outside environment outside the jet there is nevertheless only minimum concentration of free charged particles and the energy is transferred only by means of activated atoms and molecules of flowing working medium, whose concentration substantially drops with the distance from active discharge inside the jet. Therefore these types of plasma jets provide relatively cool, usually 20-50°C, exceptionally max. 120°C, and also not too much effective reactive environment to plasma-chemical polyreaction processes or modification of macromolecules. Due to a low efficiency these plasma jets are used mostly to a narrow specialised modification of surfaces of macromolecular materials, where these modifications are based on a change of surface energy upon usage of only gaseous working medium, and possibly also of gaseous precursor and the result of these changes of surface energy is exclusively a matter of surface processes, i.e. to 1 nm of thickness of surface layer of the material.

Next to this, known are researches regarding usage of high-voltage corona to plasma polymerization processes of oils (work of authors A. Groza, M. Ganciu-Petcu, A. Surmeian, and I. I. Popescu: Mol. Cryst. Liq. Cryst., Vol. 416, 2004, pp. 217=[473]-222=[478]), but also here the disadvantages are insufficient properties of the discharge, thus also the low efficiency of the process.

From patent CZ 286310 (analogy to US 6 525 481 and EP 1 077 021) there is known a method for creating the physical and chemically active environment by a plasma jet based on a principle of dielectric capillary enlaced by a hollow cathode, as well as there are known various arrangements of plasma jet or multi-jet systems. In patent CZ 286310 (analogy to US 6 525 481 and EP 1 077 021) there is also generally and only in a demonstrative listing mentioned applicability of subject matter method and the device to targeted activation and modification of the gas, liquid, mixture of gas and liquid, mixture by gas or liquid carried dust particles or small objects, further usage of the method and device for modification of surface of objects, for volumetric modifications of objects, for modifications of objects or compounds immersed or dispersed in other object, for activation of further working medium for consequent acting to the object being treated, for material change of plasma jet or its parts, for plasma-chemical synthesis or for biological objects.

From the work of authors Soukup L., Hubicka Z. and col., Surface and Coatings Technology, 169 - 170 (2003) 571 - 574, there is known a usage of the solution according to the patent CZ 286 310, at which by a plasma jet through which helium flows as a working gas and acts upon the aerosol introduced into the flow of plasma outside the plasma jet and on the carrier a layer of CeOₓ is created which is similar to plasma polymers. Disadvantage of this solution is its narrow specialisation and also usage of helium, which is relatively expensive.

The goal of the invention is to use the advantageous properties of subject matter of patent CZ 286 310 and to enable or improve realisation of polyreactions, plasma-chemical polyreactions, their modification and modification of macromolecular substances for the defined types of precursors and defined types of working media.

### The principle of invention

The goal of the invention has been reached through a manner of realisation of polyreaction, plasma-chemical polyreactions, their modification and modification of macromolecular substances by a plasma jet with dielectric capillary enlaced by a hollow cathode, when the discharge on purpose acts at least on one precursor, which is converted into macromolecules, clusters, organised clusters or composite and/or on purpose the discharge acts at least on one component of chemical polyreaction and the produced macromolecules, clusters, organised clusters or composites are modified, and/or on purpose the discharge acts directly on the macromolecular substances, clusters, organised clusters or composites, which are further modified and/or degraded.

In this manner there is enabled a concurrent acting at chemical or plasma-chemical polyreactions and possibly to modify them, especially for the purpose to reach acceleration of polymerization and polycondensation processes, elimination of undesired products or intermediate products, inducing of further suitable chemical reactions for the purpose to reach higher converting of polymerization , for the purpose to reach better properties of resultant macromolecular products, clusters, organised clusters or composites, this at the level of macro-, micro- and nano-materials, such as e.g. of a higher polymerization level of resultant polymers, better mechanical, chemical and physical properties. Further in this manner it is possible to reach increase in surface free energy, elimination of defects in surface layers, improvement of visco-elastic properties of surface layer or surface layers, increase of adhesion of binders to material under a subsequent increase of joint strength upon joining of macromolecular materials mutually or with some other materials. Through the method according to the invention the applied precursors and/or macromolecular substances and/or clusters and/or organised clusters may upon the process of plasma-chemical polyreactions simultaneously by a discharge or by other physical and mechanical methods be smeared, sealed or remelted, smeared on the surface or into the structure of carrier, while modification of the carrier may proceed upon production of a composite material. Upon modification of macromolecular substance or any other suitable carrier through this manner may locally be created in contact with surface of material the melting, which may be further modified, while suitable precursors, modified precursors or other suitable substances may be sealed or implanted into this melting. With a movement of plasma jet on surface of macromolecular substance a plastic decorating and/or relief may be created. Planar and/or plastic ornaments and decorating may also be obtained on surface of the carrier from any other material, thus even the material, which is not formed of a macromolecular substance, namely by that the macromolecular substances and/or clusters and/or organised clusters and/or composites are created or after previous applying modified in a manner according to the invention in local areas on surface of the carrier. In this way it is possible to create on surface of the carrier, except for the electrically non-conductive layers, also conductive and/or semi-conductive layers, or linear formations. With advantage the method according to the invention may be used also during degradation, splitting, eating away or evaporating of original and/or created macromolecular substances, clusters, organised clusters, composites and/or undesired accompanying products of chemical and plasma-chemical polyreactions. At plasma-chemical polyreactions of resins on basis of formaldehyde, at plasma-chemical polyreactions of formaldehyde with other precursors or at modification of macromolecules on basis of formaldehyde through the method according to the invention a creation of dangerous vapours containing formaldehyde minimizes, and a high level of ecology in technology of processing or degradation of formaldehyde and its compounds is achieved.

Advantageous embodiments of the method are shown in description of exemplary embodiments and in patent claims.

### Description of the drawing

The invention is schematically represented in a drawing where the Fig. 1 shows results of measurement of ellipsometric values on glass, the Fig. 2 a course of indentation creep of the DLC layer applied on polycarbonate, the Fig. 3 a graph of reversible time dependent elastic (anelastic) deformation of non-modified and modified DLC layer on polycarbonate, the Fig. 4a, 4b light and shade play - modified surface of glass, the Fig. 5 arrangement of device used in example of embodiment 3, the Fig. 6 exemplary arrangement of the device.

### Examples of embodiment

The invention shall be in detail described on principles and on several realisation examples of polyreactions, plasma-chemical polyreactions, their modification and modification of macromolecular substances by means of plasma jet with dielectric capillary enlaced by a hollow cathode which is connected to the source of electromagnetic energy of a power of 1 to 10³ W/jet, amplitude of voltage in digit position of 10² to 10⁴ V with possibility of its modulation, amplitude of current in digit position of 10⁻² to 10⁰ A/jet and at a frequency range of 1 MHz to microwave (300 GHz).

In vicinity or on surface of dielectric capillary there may further be additional electrodes on a different potential than the hollow cathode. Through the dielectric capillary there flows a working medium formed of argon or argon with working admixture. The pressure in external environment formed generally by a liquid, i.e. gas, fluid, viscid fluid or also by loose particles, or their mixtures varies in digit position in the range of 10³ to 10⁶ Pa.

Plasma discharge is primarily actively generated in dielectric capillary, from where it jets into an external environment, where it is also generated in a form of single-pole or double-pole discharge. In this way in an external environment created plasmatic channel contains with respect to active generating of discharge already in a cavity of hollow cathode a highly concentrated and still in an external environment actively generating mixture of plasma particles (including ions and free electrons), through which there is achieved a considerably higher energetic efficiency of the discharge on the treated objects, than at other used types of discharges and plasma jets, because electric current also flows through the outer plasma channel.

In other exemplary embodiment the plasma jet with dielectric capillary enlaced by a hollow cathode is added by an additional electrode on a different potential, than the hollow cathode, e.g it is added by at least one ring or segment electrode or at least one rod-shaped electrode. Through this supplementation of plasma jet the energy especially in a plasmatic channel in external environment may be regulated and so to create a plasmatic channel with various content of charged energetic particles e.g. up to the status, when only highly activated particles without flow of electric current in external environment do occur, i.e. only flickering out section of discharge.

According to several embodiments of this invention, a working admixture in the form of gaseous substance, aerosol, loose substance or a solid substance of suitable dimensions like e.g. linear formations. is introduced into the process while the working admixture is being introduced either into the space of plasma jet before discharge i.e. before the hollow electrode and/or it is introduced into the space of discharge of plasma jet after the hollow electrode and/or it is introduced into discharge in an external environment outside the plasma jet.

Next to this, according to several embodiments of this invention, the created discharge acts on the selected precursors, which consequently owing to complex processes laying in plasma-chemical polyreactions on various carriers or in a volume of environment create the required macromolecules and/or clusters and/or organised clusters and/or of them composed composite materials, and/or it is acted on the proceeding polyreaction processes at chemical polyreactions, which are modified through this acting, and/or it is acted on macromolecular substances and/or clusters and/or organised clusters and/or of them composed composite materials, which are further modified or degraded.

Precursors are in the form of compounds or elements in gaseous status, and/or they are in the form of fluid, aerosol, emulsion, gel, suspension, powders, granule, layer and/or block of mass in solid status, this on the level of macro-, micro-and nano- dimensions, while the discharge is acting on them in the plasma jet and/or in a volume of liquid and/or solid phase and/or on/in various carriers also on the level of macro-, micro- and nano-dimensions.

According to another advantageous embodiment, precursors are contained in the working admixture and/or in the working medium. According to another advantageous embodiment in the process there are simultaneously used at least one precursor and at least one working admixture, or at least one precursor is used independently, or at least one working admixture is used independently. According to another advantageous embodiment, only working medium is used in the process.

For purposes of this invention the macromolecular substances are understood to be polymers, condensates, plasma polymers and to plasma polymers similar substances, glass, minerals, but also proteins, polysaccharides including cellulose and lignin (i.e. wood).

The resultant macromolecular substance, clusters, organised clusters or composites are created in the form of liquid, aerosol, emulsion, gel, suspension, coagulate, powder, granulated material, membrane, layer, fibre and/or block on the level of macro-, micro- and nano- dimensions, this either on walls of dielectric capillary of plasma jet and/or in the working medium flowing through plasma jet and/or in volume of liquid and/or solid phase and/or on/in various carriers outside the plasma jet.

Carriers of macromolecular substances, macromolecular substances, composites and precursors in the form of solid material may be in a macro scale represented by three-dimensional objects.

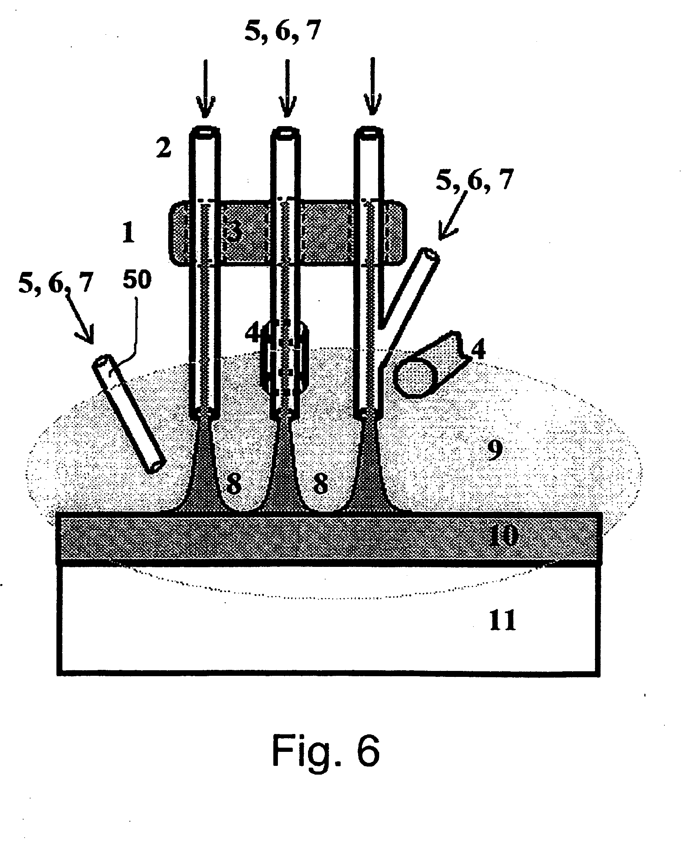

In exemplary embodiment in the Fig. 6 the device comprises at least one plasma jet **1** with dielectric capillary **2** enlaced by a hollow cathode **3**. Hollow cathode **3** is enlaced by an additional electrode **4**. Additional electrode **4** may also be arranged outside the hollow cathode **3.** Through the hollow cathode **3** there flows a working medium **5** formed by argon. Working admixture **6** and possibly also precursor **7** may also flow through the hollow electrode **3** , this according to required effect and result of a whole process. Working medium **5** and/or working admixture **6** and/or precursor **7** may into the working space be also supplied by means of auxiliary means outside the hollow cathode **3**, e.g. by an auxiliary jet **50**. Discharge **8** of plasma jet **1** may proceed either in normal working environment, i.e. in ambient atmosphere, or it may proceed in a special working environment **9**, e.g. inert atmosphere. The discharge **8** acts on or it creates macromolecular substance **10,** or clusters or organised clusters and these may be on the carrier **11.**

The following text describes particular examples of the method on various types of polyreactions, with various precursors, working substances and on various objects.

### Example 1a:

Phenol was added into a concentrated solution of formaldehyde and solution of sample was created, i.e. a substance, which will be further used in the process. Realisation of plasma-chemical polyreactions by means of a plasma jet with dielectric capillary enlaced by a hollow cathode was performed in emulsion on surface of ceramics. Emulsion from the sample solution was created on surface of ceramic carrier. Emulsion was gradually masticated and spread on surface of the carrier by discharge of plasma jet with dielectric capillary enlaced by a hollow cathode under working conditions: power 150 W (13,56 MHz), flow rate of argon 2 l/min. In case when emulsion was spread into a very thin layer, very thin and relatively hard macromolecular layer covering the surface of carrier was created. In case, that emulsion was masticated into a more massive formations, a typical viscous resin was created. For even covering of carrier surface it is possible to use with advantage a system of more plasma jets with dielectric capillary enlaced by a hollow cathode in line side by side or in more lines one after another, while the jets in the following line with advantage cover the space between the jets in the previous line (matrix arrangement). With advantage it is also possible to use suitable configuration of jets into a semi-opened formations like e.g. into V or U letter, etc., while the movement direction is the most suitable namely in the direction of semi-opened section of jet formation. Upon this realisation of plasma-chemical polyreactions only minimum releasing of formaldehyde vapours was observed.

### Example 1b:

Phenol was added into a concentrated solution of formaldehyde and solution of sample was created. Realisation of plasma-chemical polyreactions by means of a plasma jet with dielectric capillary enlaced by a hollow cathode was performed in volume of sample solution in a vessel. Plasma jet with dielectric capillary enlaced by hollow cathode was inserted into the prepared solution and the discharge was fired under the working conditions: power of 100 W (13,56 MHz), flow rate of argon 1 I/min. During several units up to tens of seconds in volume of solution separating macromolecular formations in the form of thin fibres were observed.

### Example 2:

Plasma jet with dielectric capillary enlaced by hollow cathode was dipped under the level of suspension of non-miscible liquid precursors formed by a mixture of benzene and H₂O. The suspension was stirred by argon. By firing the discharge under working conditions: 100-200 W (13,56 MHz), flow rate of argon 1 I/min, plasma-chemical polyreaction was started expressing itself by immediate creation of macromolecules upon formation of gels.

### Example 3a:

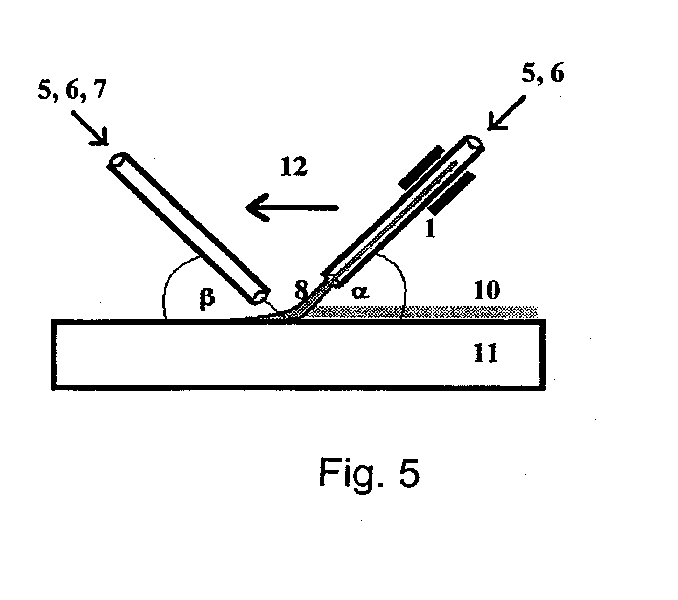

Precursor in the form of salt solution, e.g. cupric nitrate, cupric sulfate or silver nitrate, in distilled water, was added in the form of aerosol. Aerosol was generated by an ultrasonic aerosol generator and it was carried by argon of the flow rate of 0,5 l/min and it was directed by a single dielectric jet. Discharge of plasma jet with dielectric capillary enlaced by hollow cathode at working conditions: power of 100 W (13,56 MHz), flow rate of argon 1,5 I/min, was under an angle in the range of 15° - 90° sprayed on surface of the carrier (e.g. glass, ceramics and plastic, ). Aerosol was added by an single dielectric jet only in an external environment, namely into a sprayed section of the discharge or it was added into plasmatic channel, this in an opposite direction than the movement direction of plasma jet with dielectric capillary enlaced by a hollow cathode, this under an angle in the range 15° - 90°, as represented in the Fig. 5. The jets were moving simultaneously in the direction 12. The speed of movement of jets on a carrier upon applying a layer of various geometric formations may be up to several m/min. On surface of the carrier there was created an inorganic, to plasma polymers similar layer, possibly a layer from various level of organised clusters, having composition according to the used precursor, e.g. mostly from oxide compounds of copper and other compounds, which is not soluble in water, non-stripping, has a good adhesion to the carrier and is resistant to scratching. Under certain conditions such created layer may show even a slight electric conductivity with electric current in digit position of 10⁵ Ω/cm (electric resistance of the layer on a length of 1 cm) and higher. This procedure may be used e.g. at decorating the glass, ceramics or plastics.

### Example 3b:

First of all the procedure according to the example 3a was applied, by which an electrically non-conductive or semi-conductive layer was created, e.g. with usage of precursor formed of silver nitrate. In the next step, this layer was modified by a discharge of plasma jet with dielectric capillary (e.g. of inner diameter of 2 mm) enlaced by a hollow cathode generated in argon with working conditions: power 70 W (13,56 MHz), flow rate of argon 2 I/min, and simultaneously in inert atmosphere so, that the discharge (plasmatic column) was moving on before created electrically non-conductive or semi-conductive layer and modified it, through which was produced highly electrically conductive layer composed of organised electrically conductive clusters of metal subjected to deoxidizing with electric resistance in digit position of 10⁻¹ to 10³ Ω or lower to 1 cm of length of layer. The produced layer having thickness in digit position of 10¹-10³ nm (according to the speed of movement of jets) had a width of 3-5 mm for the selected jet.

### Example 3c:

First of all the procedure according to the example 3a was applied with the difference, that only argon was used without aerosol and the process was performed in inert atmosphere under a power of 70 W supplied into the plasma jet. Electrically conductive layer with properties similar as in the example 3b was produced.

### Example 3d:

First of all the procedure according to the example 3c was applied with the difference, that only a small working volume of inert atmosphere around discharge of plasma jet with dielectric capillary enlaced by a hollow cathode was applied, and aerosol was brought into the area above carrier's surface only into the space close to discharge. The layer with similar properties like in example 3b was produced.

### Example 4:

Precursors in the form of granule, e.g. derivates of phosphazenes, were spilled on a surface of the carrier (e.g. ceramics). Granule of precursors were subject to acting of discharge of plasma jet with dielectric capillary enlaced by a hollow cathode at the power of 100-150 W (13,56 MHz) and flow rate of argon of 1 l/min. Discharge of plasma jet first melted the granule of precursors, and after then at a simultaneous course of plasma-chemical polyreactions and through modification of macromolecular products as well as precursors these were spread out up to rubbed in or also sealed into a more or less porous surface of the carrier (ceramics).

### Example 5:

A strip of fabric under motion, speed of motion 3,25 m/min, impregnated with a solution of phenol formaldehyde resin was subjected to plasma jet with dielectric capillary enlaced by a hollow cathode in arrangement of an single jet, flow rate of Ar 2 I/min, power of 200 W (13,56 MHz), and in arrangement as a multi-jet system counting to 10 jets one after another connected with one electrode to the source, flow rate of Ar cca 1 I/min to one jet, total supplied power of 200 W. A very high speed of creating of macromolecular products and their curing in a trace having width of about 5-10 mm was observed. At multi-jet system distinctly higher effects were observed than at acting by the single jet. The accompanying evaporating of formaldehyde was minimised, against technology with exclusively thermal initiated process, which is positive for ecology of the process. High speed of process course is given by complex initiatory effects of plasma, as in plasma there proceed multichannel physical and chemical reactions, at which simultaneously occur practically all types of initiators of polycondensation and/or polymerization reactions, like thermal energy, loose radicals, loose electrons and ions or UV radiation. There was a substantial shift in balance of plasma-chemical polyreactions (liken to polycondensation reactions) toward the goal products - macromolecules and their cross-linking, because there occurs degradation (dissociation, possibly intensive evaporating) of waste products usually created at polycondensations, which influence the resultant speed and balance of products (like e.g. H₂O, ).

The advantage of the procedure according to example 5 is joining of thermal properties of plasmatic discharge of plasma jet with dielectric capillary enlaced by a hollow cathode and of further physical-chemical initiators in concentrated directable form for a distinct speeding of processes of macromolecules creating and their cross-linking and simultaneously a change of their course with minimum release of formaldehyde vapours (possibly their degradation directly in the discharge), i.e. high ecology of the new technology.

### Example 6:

The plasma jet with dielectric capillary enlaced by a hollow cathode was used, while the dielectric capillary was formed from a silica glass, this all in execution with a handle for manual manipulation, so called plasma pencil. Plasma pencil was fixed, the sample was moving in a constant speed. Before application the surface of sample was degreased by means of trichloroethylene. Two different distances of the mouth of plasma jet from surface of polypropylene were selected with the goal to simulate the height range (allowance) at real shift of plasma pencil held by a hand of operator during treatment of complex spatial formations or objects. Working conditions were as follows: working gas argon (of technical purity, i.e. 4,6), flow rate of 5 l/min, power of high-frequency source (13,56 MHz) supplying the plasma pencil of 100 W, 1x passing of the sample through discharge.

For calculation of surface energy of treated sample contact angles for 3 various liquids were measured (distilled H₂O, ethylene glycol, diiodomethane), and the Owens-Wendt-Rable-Kaeble (OWRK) regression model was used for calculation.

Results are summarised in the following table.

| Sample | Distance of jet from surface | Speed of movement | | Surface free energy **(mJ/m²** = **mN/m)** |
|---|---|---|---|---|
| | (mm) | (m/min) | (cm/s) | |
| Org. | - | - | - | 38.54 |
| 1 | 1 | 1,44 | 2,4 | 46.54 |
| 2 | 1 | 3,24 | 5,4 | 45.51 |
| 3 | 11 | 1,44 | 2,4 | 45.69 |
| 4 | 11 | 3,24 | 5,4 | 43.02 |

From the values shown in the table it results that modification of surface of polypropylene by plasma jet considerably increases surface energy, thus improves the wettability of the surface, e.g. for applying of colours or glues. Simultaneously with improving of wettability of surface the active area of surface for creating of joints of bonding agents during bonding of material (leaking in of the bonding agent also into micropores.) is increased, and so the mechanical structure of bonding agents during bonding is improved. During treatment of the sample surface by discharge of plasma jet simultaneously with change of surface free energy, the surface was also cleaned from possible impurities, which prevent a good adhesion of bonding agents during bonding, that means the adhesion was increased.

### Example 6a:

Steps according to example 6 were performed with the difference, that into the discharge the working admixtures were introduced with the goal of their intentional building into the surface layer of the treated sample, with the goal to create active free groups hydroxy-, carbonyl-, carboxymethyl-, amino- and other according to the type of selected bonding agent, or directly with the goal of modification of the surface layer of the treated sample. Through this procedure adhesion of bonding agents was increased.

### Example 7:

For modifications of glass surface layers the plasma jet with dielectric capillary enlaced by a hollow cathode was used, while the dielectric capillary was created from a silica glass, this all in execution with a handle for manual manipulation, so called plasma pencil. The surface of glass sample having area of 2 cm² was evenly subjected to acting of discharge of plasma pencil for a period of 30s upon scanning the discharge on surface under the working conditions: working gas argon (technical purity, i.e. 4,6), flow rate of 3 I/min, power of high-frequency source (13,56 MHz) supplying the plasma pencil 100 W.

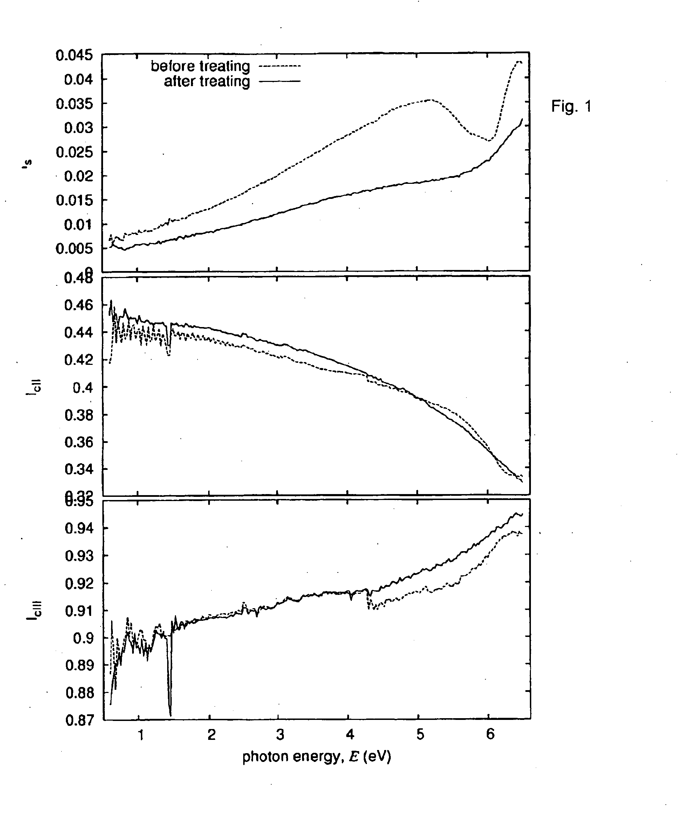

The Fig. 1 shows a difference between measurement of ellipsometric values on glass, which was not subjected to acting of discharge of plasma pencil (before treating) and on glass which was subjected to acting of discharge of plasma pencil (after treating). In the graph there are plotted spectral dependencies of ellipsometric values expressed on Poincare sphere, when the "Is" value represents influence of weak absorption of the surface being studied. On glass, that was not subjected to acting of discharge of plasma pencil, in the spectra the absorption peaks are visible, which are as a standard attributed to defective statuses on surface of glass (spot defects in surface layer). These defective statuses have energy around 5 eV to 7 eV. By acting of discharge of plasma pencil these absorption peaks are suppressed, which can be interpreted by that, the surface defects of glass were eliminated by means of effects of discharge of plasma pencil. This technology of defects elimination on surface of glass and in its surface layers may be used with advantage especially as a pre-treatment of glass surface before further applications, e.g. nano-technology, also at structural joints, . Simultaneously with processes of defects elimination there was observed an increase in surface free energy of glass subjected to acting of plasma pencil discharge and wettability of surface was increased and adhesive properties were improved.

### Example 8:

For modifications of glass surface layers using the plasma jet with dielectric capillary enlaced by a hollow cathode with the aim to improve adhesive properties of glass during bonding the plasma jet with dielectric jet in a form of capillary made of silica glass was used, this all in execution with handle for manual manipulation, so called plasma pencil. Surface of glass samples was evenly subjected to acting of plasma pencil discharge for a period of 5 s /sample under working conditions: working gas argon (technical purity, i.e. 4,6), flow rate of 5 l/min, working admixture in a form of vapours of distilled H₂O, that were carried by argon through the plasma jet, power of high-frequency source (13,56 MHz) supplying the plasma pencil 60 W.

After bonding of joints of samples subjected to action of plasma pencil discharge and samples not subjected to action of plasma pencil discharge the bursting tests were performed. At bonded samples subjected to acting of plasma pencil discharge an improvement in adhesion of bonded joint on interface glass-glue by cca 25% was achieved. This is caused by improvement of chemical bond through that during acting of plasma free OH bonds were created on glass surface, which results in better and stronger bond between the glue and glass surface. Another positive factor is cleaning of sample surface from impurities and improvement of mechanical bond based on increase of wettability of surface (surface free energy) and increasing of surface of bonded joint by micropores, where the glue leaked in easier.

### Example 9:

For modification of plasma polymers of DLC and SiOₓ type of layers applied on samples of polycarbonate through low-pressure plasma technologies (PECVD) by means of plasma jet with dielectric capillary enlaced by a hollow cathode two groups of samples were selected, namely samples with layer of ideal mechanical parameters (hardness, wear resistance, elasticity, minimal stress in the layer, without local damage of the layer.), and samples with disturbed layer (hard wear resistant layers but with high intrinsic stress, local damage of layer-substrate interface in many places, tendency to delamination). Modification by plasma jet with dielectric capillary enlaced by a hollow cathode proceeded at both types of samples under the same conditions, namely working gas argon (technical purity - 4,6), flow rate of 5 l/min, power of high-frequency source (13,56 MHz) 150 W, 10x passing of the sample through plasma discharge. Plasma jet with dielectric capillary enlaced by a hollow cathode and with dielectric jet (capillary of silica glass) was fixed, sample of polycarbonate with layer determined for modification was moving in a constant speed of 24 mm/s. The distance of the mouth of plasma jet from sample surface was 2 mm.

Modified layers were tested by means of instrumented indentation test using the Fischerscope H100 instrument. In both cases the modified layers did not lose hardness, which remained either the same or increased slightly. In both cases the modified layers showed substantially better visco-elastic properties (elastic reversibility, relaxation properties of toughness.) upon simultaneous elimination of defects in surface layers (lowering of stress in layers or lowering of tendency to delamination of layers).

In a case of system of a thin hard layer on soft viscoelastic-plastic carrier the layer-carrier system shows except of elastic and plastic indentation response also an important time-dependent plastic deformation (creep) and time dependent reversible (anelastic) deformation. Elastic material on an easier deformable carrier shows so called "plate-bending" effect, i.e. that the layer behaves on a soft material as a hard and elastic membrane. If we load such system and then maintain a constant loading, the depth starts to change thanks to viscoplastic or viscoelastic response. Indents obtained at low indentation loads may "heal out" in the course of time. It was demonstrated further, that the above mentioned properties of systems hard layer/viscoelastic-plastic carrier after such modification using plasma jet with dielectric capillary enlaced by a hollow cathode are much more expressive.

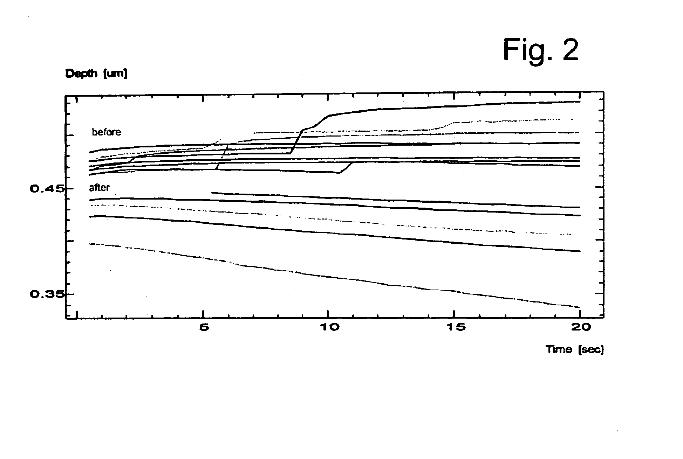

The Fig. 2 represents an indentation creep (dependence of indent depth of testing corpuscle on time at constant loading) of the DLC layer applied on polycarbonate before modification (upper curves) and after modification (lower curves - under the text) at maximum load of 3 mN. Material curves before modification are classic creep curves, when deformation, i.e. indent depth at constant loading increases with time. In some cases the non-modified hard layer is breaking during indent, which is in the Fig. 2 seen as an abrupt jump in curves. As seen from the Fig. 2 on curves of modified layers, breakage disappeared and also at keeping the constant loading the deformation, i.e. depth of indent, decreases (so called anelastic, or time dependent reversible elastic deformation).

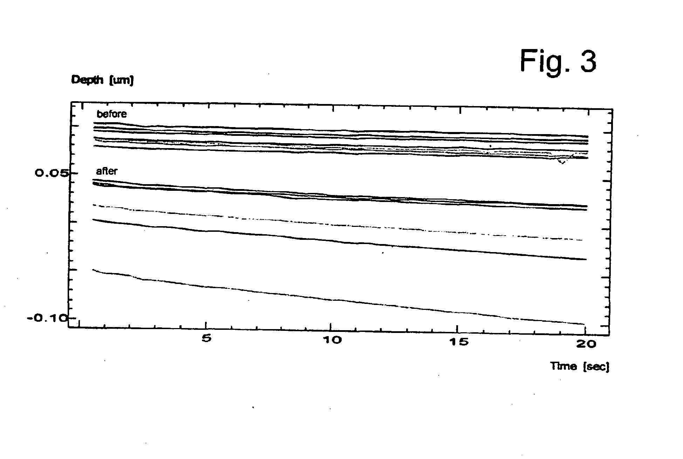

The Fig. 3 represents a reversible time dependent elastic (anelastic) deformation of non-modified and modified DLC layer on polycarbonate, minimum indentation load at testing was 0,4 mN. It is obvious, that after modification the unelastic deformation of the layer/carrier system increased considerably, i.e. the tendency of layer to self curing of deformation caused by indent increased.

Simultaneously with processes of defect elimination at modification the surface free energy is being increased, i.e. the surface wettability is increased and adhesive properties are improved. The modified SiOₓ layers show a similar behaviour, too.

Technology for improving of visco-elastic properties of plasma polymers on polycarbonates (nevertheless generally on any carrier) may have an important application e.g. in automobile industry, where at present there is an gradual transition from inorganic glasses to polycarbonate glasses, on whose surface thin protective layers are applied, mostly by plasma technologies, so as to protect the polycarbonate against a mechanical damage.

### Example 10:

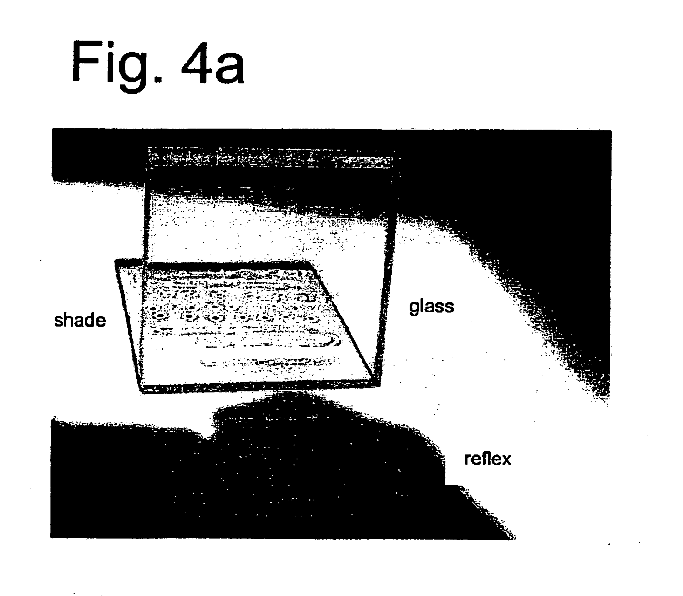

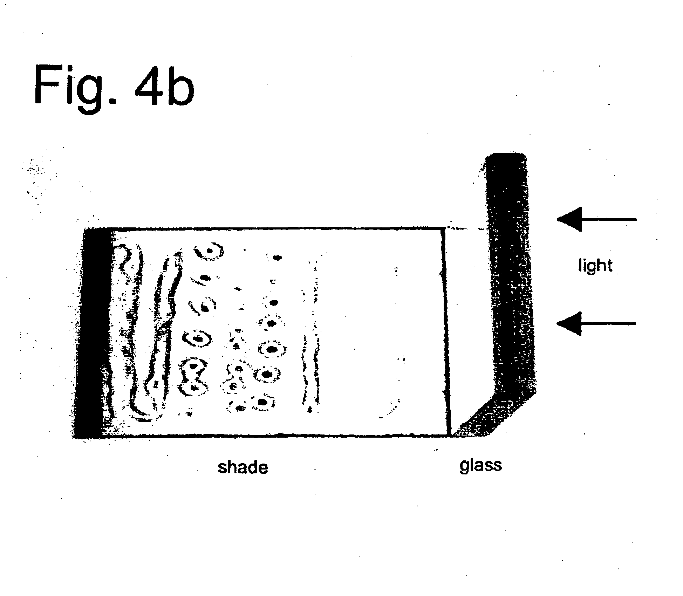

A glass tempered to temperature of about 500 °C or higher was used for decorating and for surface forming of glass. Discharge of plasma jet with dielectric capillary enlaced by a hollow cathode at working conditions power of 150-200 W to frequency of 13,56 MHz, flow rate of argon 0,3 I/min created a melting locally in contact with surface of glass. By moving the plasma jet on surface of glass a decoration with slightly projecting relief was formed, whose height may be altered by means of selected working conditions. Through creating the relief locally optical properties of modified surface are changed substantially, so called light and shade play arises, as represented in the Fig 4 a, b. In case of heat resistant glass, e.g. Pyrex or Simax, it is not necessary for modification to temper. The relief created and/or plastic decor may also be used e.g. as the means for creating the spacing distance for further joining of such glasses.

### Example 11:

For decorating and local modification of surface and subsurface layers of glass the procedure e.g. according to example 3a to 3d and according to example 10 was applied, modified in such a manner that the discharge of plasma jet with dielectric capillary enlaced by a hollow cathode in contact with glass surface locally creates melting, into which the precursors and/or modified precursors and/or macromolecular substances and/or clusters and/or organised clusters and/or of them composed composite materials on the level of macro-, micro- and nano- dimensions are subjected to sealing in. In this way the surface of the carrier obtains new suitable properties. Moreover, by motion of the discharge of plasma jet with dielectric capillary enlaced by a hollow cathode on surface of the glass the decorating may be created.

## Claims

1. Method for realisation of polyreactions, plasma-chemical polyreactions, their modification and modification of macromolecular substances through discharge of at least one plasma jet with dielectric capillary having inner diameter of 0,01 - 10 mm, which is enlaced by a hollow cathode connected to the source of electromagnetic energy of a power of 1 to 10³ W/jet, amplitude of voltage in digit position of 10² to 10⁴ V with possibility of its modulation, amplitude of current in digit position of 10⁻² to 10⁰ A/jet and at a frequency range of 1 MHz to microwave, while in vicinity and/or on surface of dielectric capillary there is possibly at least one additional electrode on a different electrical potential than a hollow cathode, while argon flows through the dielectric capillary at a pressure of external environment of 10³ to 10⁶ Pa, **characterised by** that the discharge on purpose acts at least on one precursor, which is converted into macromolecules, clusters, organised clusters or composite and/or on purpose the discharge acts at least on one component of chemical polyreaction and the produced macromolecules, clusters, organised clusters or composites are modified, and/or on purpose the discharge acts directly on the macromolecular substances, clusters, organised clusters or composites, which are further modified and/or degraded.

2. Method according to the claim 1, **characterised by** that, first of all outside the discharge of the plasma jet the chemical polyreactions are realised and by means of the discharge of plasma jet is acted either simultaneously with proceeding chemical polyreactions from the start of the chemical polyreactions or in their proceeding or by means of the discharge of plasma jet is acted to the resultant products of chemical polyreactions, namely immediately after the chemical polyreactions are finished or with a time delay after completion of chemical polyreactions.

3. Method according to the claim 1, **characterised by** that at first the plasma-chemical polyreactions are realised by means of the discharge of plasma jet and with their resultant products further chemical polyreaction are realised.

4. Method according to the claim 1, **characterised by** that at first the plasma-chemical polyreactions are started by the discharge of plasma jet and from the selected phase of proceeding plasma-chemical polyreactions the chemical polyreactions are started simultaneously.

5. Method according to the claim 4, **characterised by** that the chemical polyreactions are interrupted in a certain phase of their proceeding.

6. Method according to the claim 1, **characterised by** that in unrepeated cycle it is acted only by the discharge of plasma jet, through which only plasma-chemical polyreactions are realised.

7. Method according to the claim 1, **characterised by** that at first the plasma-chemical polyreactions are realised by means of the discharge of plasma jet and after then the produced resultant products are again subjected to the discharge of plasma jet, through which the primary resultant products are transformed.

8. Method according to the claim 1, **characterised by** that at first the plasma-chemical polyreactions are realised without acting of the discharge of plasma jet and after then in the course or immediately after completion or with a time interval after completion of these plasma-chemical polyreactions it is acted by the discharge of plasma jet.

9. Method according to the claim 1, **characterised by** that at first the plasma-chemical polyreactions are realised by means of the discharge of plasma jet and after then it is acted by another discharge, this either in the course of plasma-chemical polyreactions initiated by discharge of plasma jet or immediately after their completion or with time interval.

10. Method according to the claim 1, **characterised by** that by means of the discharge of plasma jet is purposely acted on at least one precursor in gaseous, liquid status, in the form of aerosol, emulsion, gel, suspension, powder, granule, layer and/or block of mass in solid status, while by the discharge of plasma jet it is acted on them directly in the plasma jet and/or in the volume of liquid phase and/or in the volume of solid phase and/or on various carriers and/or in various carriers.

11. Method according to the claim 1, **characterised by** that into the discharge of plasma jet or into its vicinity is introduced a working admixture in the form of gas, aerosol, loose substance or solid substance, while the working admixture is into the discharge introduced through the space of plasma jet before the discharge and/or through the space of the discharge of plasma jet behind a hollow electrode and/or it is introduced into the discharge in external environment outside the plasma jet.

12. Method according to the claim 1, **characterised by** that by acting of the discharge of plasma jet there is created a gas, liquid, aerosol, emulsion, gel, suspension, coagulate, powder, granule, membrane, layer, fibre and/or block on walls of dielectric capillary of plasma jet and/or in working medium flowing through the plasma jet and/or in volume of liquid or solid phase and/or on various carriers outside the plasma jet and/or in various carriers outside the plasma jet.

13. Method according to the claim 1, **characterised by** that by acting of the discharge of plasma jet there are created a gas, liquid, aerosol, emulsion, gel, suspension, powder, granule, membrane, layer and/or block of material or its mixtures.

14. Method according to the claim 1, **characterised by** that, by means of the discharge of plasma jet the surface energy of macromolecular substances, clusters, organised clusters or composites is increased, and/or defects in surface layers are eliminated, and/or the visco-elastic properties of surface layer or surface layers are improved, and/or adhesion of bonding agents and strength of bonded joint is increased.

15. Method according to the claim 1, **characterised by** that by means of the discharge of plasma jet the plasma-chemical polyreactions and processes of degradation, and/or splitting and/or eating away and/or evaporating of original and/or produced macromolecular substances and/or undesired accompanying products of chemical and plasma-chemical polyreactions are realised.

16. Method according to the claim 1, **characterised by** that by means of the discharge of plasma jet the precursors and/or macromolecular substances and/or clusters and/or organised clusters and/or composites are applied on the carrier.

17. Method according to the claim 16, **characterised by** that by means of the discharge of plasma jet on the carrier applied precursors and/or macromolecular substances and/or clusters and/or organised clusters and/or composites are at the same time modified by plasma-chemical polyreactions.

18. Method according to the claim 16 or 17, **characterised by** that by means of the discharge of plasma jet on the carrier applied precursors and/or macromolecular substances and/or clusters and/or organised clusters and/or composites are by means of physical and/or mechanical methods smeared on surface of the carrier and/or sealed into surface of the carrier and/or they are remelted on surface of the carrier.

19. Method according to the claim 18, **characterised by** that upon smearing on the surface of the carrier and/or sealing into the surface of the carrier and/or remelting on surface of the carrier the surface of the carrier is modified upon creation of the composite material.

20. Method according to the claim 1, **characterised by** that by means of the discharge of plasma jet the surface of carrier is modified, while on this surface there is created melting which is modified.

21. Method according to the claim 20, **characterised by** that into the melting on surface of the carrier through the discharge of plasma jet the precursors and/or modified precursors and/or working admixtures in working medium and/or only working medium and/or macromolecular substances and/or clusters and/or organised clusters and/or of them composed composite materials are sealed and/or implanted.

22. Method according to the claim 21, **characterised by** that by means of the discharge of plasma jet it is moved on the surface of the carrier and the plastic decorating and/or relief is created.

23. Method according to the claim 22, **characterised by** that the plastic decorating and/or relief has a continual or local or spot geometry.

24. Method according to the claim 22, **characterised by** that the plastic decorating and/or relief is used as a means for creating the spacing distance for further bonding.

25. Method according to any of the claims 20 to 24, **characterised by** that the carrier is from the material group: glass, glassy material, plastic, polycarbonate, mineral.

26. Method according to the claim 1, **characterised by** that by means of discharge of plasma jet on surface of the carrier there is created and/or modified planar and/or plastic formation.

27. Method according to the claim 1, **characterised by** that by means of discharge of plasma jet on surface of the carrier there is created and/or modified electrically conductive layer and/or other electrically conductive geometric formation.

28. Method according to the claim 27, **characterised by** that the precursor is transformed into the form of aerosol, which is carried by an inert gas and it is by an additional dielectric jet directed into the sprayed section of discharge of plasma jet or into the plasmatic channel in an external environment under the β angle in the range of 15 - 90 °, while discharge of plasma jet is generated in argon on a free atmosphere and under the α angle in the range of 15 - 90 ° it is sprayed on surface of carrier, through which an ornament, decorating or electrically non-conductive or semi-conductive layer is created on surface of the carrier.

29. Method according to the claim 27, **characterised by** that the created non-conductive or semi-conductive layer is subjected to acting of the discharge of plasma jet generated in argon and simultaneously in inert atmosphere of environment, through which this layer is modified and highly electrically conductive layer composed of organised conductive clusters of metal subjected to deoxidizing and having electric resistance in digit position of 10⁻¹ to 10³ Ω or smaller to 1 cm of the length of the layer is created.

30. Method according to the claim 28, **characterised by** that the created non-conductive or semi-conductive layer is subjected to acting of the discharge of plasma jet generated in argon and simultaneously in a small volume of inert atmosphere around the discharge of the plasma jet in area above the surface of the carrier, while aerosol is brought only to a space close to the discharge, through which electrically conductive layer with electrical resistance in digit position of 10⁻¹ to 10³ Ω or smaller to 1 cm of the length of the layer is created.

31. Method according to the claim 1, **characterised by** that by means of the discharge of plasma jet it is acted on formaldehyde with at least one precursor, and/or resin on basis of formaldehyde, and/or on further macromolecules on basis of formaldehyde, through which the plasma-chemical polyreactions with minimised occurrence of dangerous vapours containing formaldehyde are realised.

## Patentansprüche

1. Das Verfahren der Realisierung der Polyreaktionen, der plasmachemischen Polyreaktionen, ihrer Modifizierung und Modifizierung der makromolekularen Stoffe durch die Entladung von mindestens einer Plasmadüse mit einer dielektrischen Kapillare mit einem Innendurchmesser von 0,01 - 10 mm, die von einer Hohlkathode umschlossen wird, die an die Quelle der elektromagnetischen Energie mit der Leistung von 1 bis 10³ W/Düse, Spannungsamplitude in der Größenordnung von 10² bis 10⁴ V mit der Möglichkeit deren Modulation, Stromamplitude in der Größenordnung von 10⁻² bis 10⁰ A/Düse und bei einem Frequenzumfang von1 MHz bis Mikrowellen angeschlossen ist, wobei sich in der Nähe und/oder auf der Oberfläche der dielektrischen Kapillare eventuell mindestens eine Zusatzelektrode auf einem unterschiedlichen elektrischen Potential befindet, als es bei der Hohlkathode der Fall ist, wobei durch die dielektrische Kapillare Argon mit einem Druck des Außenumfelds von 10³ bis 10⁶ Pa strömt, **dadurch gekennzeichnet, dass** mit der Entladung auf mindestens einen Präkursor gezielt gewirkt wird, der auf Makromoleküle, Cluster, organisierte Cluster oder Kompositen umgewandelt wird und/oder mit der Entladung auf mindestens eine Komponente der chemischen Polyreaktion gezielt gewirkt wird und gebildete Makromoleküle, Cluster, organisierte Cluster oder Kompositen modifiziert werden, und/oder mit der Entladung direkt auf makromolekulare Stoffe, Cluster, organisierte Cluster oder Kompositen gezielt gewirkt wird, die weiter modifiziert und/oder abgebaut werden.

2. Verfahren nach dem Anspruch 1, **dadurch gekennzeichnet, dass** zuerst außerhalb der Entladung der Plasmadüse chemische Polyreaktionen realisiert werden und mit der Entladung der Plasmadüse entweder gleichzeitig mit verlaufenden chemischen Polyreaktionen von Anfang des Verlaufes der chemischen Polyreaktionen an oder erst in deren Verlauf gewirkt wird oder mit der Entladung der Plasmadüse bis auf resultierende Produkte der chemischen Polyreaktionen unmittelbar nach der Beendigung der chemischen Polyreaktionen oder mit einer zeitlichen Verzögerung nach der Beendigung der chemischen Polyreaktionen gewirkt wird.

3. Verfahren nach dem Anspruch 1, **dadurch gekennzeichnet, dass** mit der Entladung der Plasmadüse zuerst plasmachemische Polyreaktionen realisiert werden, und mit deren resultierenden Produkten weitere chemische Polyreaktionen realisiert werden.

4. Verfahren nach dem Anspruch 1, **dadurch gekennzeichnet, dass** mit der Entladung der Plasmadüse zuerst plasmachemische Polyreaktionen gestartet werden und ab der gewählten Phase der verlaufenden plasmachemischen Polyreaktionen zugleich chemische Polyreaktionen gestartet werden.

5. Verfahren nach dem Anspruch 4, **dadurch gekennzeichnet, dass** chemische Polyreaktionen in der gewählten Phase unterbrochen werden.

6. Verfahren nach dem Anspruch 1, **dadurch gekennzeichnet, dass** innerhalb des einmaligen Zyklus nur mit der Entladung der Plasmadüse gewirkt wird, wobei man nur plasmachemische Polyreaktionen realisiert.

7. Verfahren nach dem Anspruch 1, **dadurch gekennzeichnet, dass** mit der Entladung der Plasmadüse zuerst plasmachemische Polyreaktionen realisiert werden, wonach auf entstandene resultierende Produkte wieder mit der Entladung der Plasmadüse gewirkt wird, wodurch die primären resultierenden Produkte umgewandelt werden.

8. Verfahren nach dem Anspruch 1, **dadurch gekennzeichnet, dass** zuerst plasmachemische Polyreaktionen ohne die Wirkung der Entladung der Plasmadüse realisiert werden, wonach im Laufe oder unmittelbar nach der Beendigung oder mit einer zeitlichen Verzögerung nach der Beendigung dieser plasmachemischen Polyreaktionen mit der Entladung der Plasmadüse gewirkt wird.

9. Verfahren nach dem Anspruch 1, **dadurch gekennzeichnet, dass** zuerst mit der Entladung der Plasmadüse plasmachemische Polyreaktionen realisiert werden, wonach man mit einer anderen Entladung wirkt, und zwar entweder im Laufe der plasmachemischen Polyreaktionen, die durch die Entladung der Plasmadüse ausgelöst werden, oder unmittelbar nach deren Beendigung oder mit einer zeitlichen Verzögerung.

10. Verfahren nach dem Anspruch 1, **dadurch gekennzeichnet, dass** mit der Entladung der Plasmadüse auf mindestens einen Präkursor in dem gasförmigen, flüssigen Zustand, in der Form von Aerosol, Emulsion, Gel, Suspension, Pulver, Splitt, Schicht und/oder Block des Stoffes in dem festen Zustand gezielt gewirkt wird, wobei auf sie mit der Entladung der Plasmadüse direkt in der Plasmadüse und/oder im Inhalt der flüssigen Phase und/oder im Inhalt der festen Phase und/oder auf verschiedenen Trägern und/oder in verschiedenen Trägern gewirkt wird.

11. Verfahren nach dem Anspruch 1, **dadurch gekennzeichnet, dass** in die Entladung der Plasmadüse oder in ihre Nähe eine Arbeitsbeimischung in der Form des Gases, Aerosols, Schüttstoffes oder Feststoffes eingeleitet wird, wobei die Arbeitsbeimischung in die jeweilige Entladung durch den Raum der Plasmadüse vor der Entladung und/oder durch den Raum der Entladung der Plasmadüse hinter die Hohlelektrode eingeleitet wird und/oder in die Entladung in dem Außenumfeld außerhalb der Plasmadüse eingeleitet wird.

12. Verfahren nach dem Anspruch 1, **dadurch gekennzeichnet, dass** durch die Wirkung der Entladung der Plasmadüse Gas, Flüssigkeit, Aerosol, Emulsion, Gel, Suspension, Ausscheidung, Pulver, Splitt, Membrane, Schicht, Faser und/oder Block an den Wänden der dielektrischen Kapillare der Plasmadüse und/oder im Arbeitsmedium, das durch die Plasmadüse strömt, und/oder im Inhalt der flüssigen oder festen Phase und/oder auf verschiedenen Trägern außerhalb der Plasmadüse und/oder in verschiedenen Trägern außerhalb der Plasmadüse gebildet werden.

13. Verfahren nach dem Anspruch 1, **dadurch gekennzeichnet, dass** durch die Wirkung der Entladung der Plasmadüse Gas, Flüssigkeit, Aerosol, Emulsion, Gel, Suspension, Pulver, Splitt, Membrane, Schicht und/oder Block vom Material oder ihrer Mischungen gebildet werden.

14. Verfahren nach dem Anspruch 1, **dadurch gekennzeichnet, dass** mit der Entladung der Plasmadüse die Oberflächenenergie der makromolekularen Stoffe, Cluster, organisierten Cluster oder Kompositen erhöht wird und/oder Störungen in den Oberflächenschichten eliminiert werden und/oder visko-elastische Eigenschaften der Oberflächenschicht oder der Oberflächenschichten verbessert werden und/oder Adhäsion der Bindemittel und Festigkeit der verklebten Verbindung erhöht werden.

15. Verfahren nach dem Anspruch 1, **dadurch gekennzeichnet, dass** mit der Entladung der Plasmadüse plasmachemische Polyreaktionen und Abbauprozesse und/oder Spaltung und/oder Abätzung und/oder Verdampfung der ursprünglichen und/oder zu bildenden makromolekularen Stoffe und/oder unerwünschten Begleitprodukte der chemischen und plasmachemischen Polyreaktionen realisiert werden.

16. Verfahren nach dem Anspruch 1, **dadurch gekennzeichnet, dass** mit der Entladung der Plasmadüse Präkursore und/oder makromolekulare Stoffe und/oder Cluster und/oder organisierte Cluster und/oder Kompositen auf den Träger aufgetragen werden.

17. Verfahren nach dem Anspruch 16, **dadurch gekennzeichnet, dass** mit der Entladung der Plasmadüse auf den Träger aufgetragene Präkursoren und/oder makromolekulare Stoffe und/oder Cluster und/oder organisierte Cluster und/oder Kompositen zugleich durch plasmachemische Polyreaktionen modifiziert werden.

18. Verfahren nach dem Anspruch 16 oder 17, **dadurch gekennzeichnet, dass** mit der Entladung der Plasmadüse auf den Träger aufgetragene Präkursoren und/oder makromolekulare Stoffe und/oder Cluster und/oder organisierte Cluster und/oder Kompositen durch physikalische und/oder mechanische Verfahren auf der Oberfläche des Trägers eingerieben werden und/oder in die Trägeroberfläche eingeschmolzen werden und/oder auf der Trägeroberfläche umgeschmolzen werden.

19. Verfahren nach dem Anspruch 18, **dadurch gekennzeichnet, dass** beim Einreiben auf der Trägeroberfläche und/oder Einschmelzung in die Trägeroberfläche und/oder Umschmelzung auf der Trägeroberfläche die Trägeroberfläche unter der Entstehung des Kompositmaterials modifiziert wird.

20. Verfahren nach dem Anspruch 1, **dadurch gekennzeichnet, dass** mit der Entladung der Plasmadüse die Trägeroberfläche modifiziert wird, wobei auf dieser Oberfläche eine Schmelze gebildet wird, die modifiziert wird.

21. Verfahren nach dem Anspruch 20, **dadurch gekennzeichnet, dass** in die Schmelze auf der Trägeroberfläche durch die Entladung der Plasmadüse Präkursoren und/oder modifizierte Präkursoren und/oder Arbeitsbeimischungen im Arbeitsmedium und/oder nur Arbeitsmedium und/oder makromolekulare Stoffe und/oder Cluster und/oder organisierte Cluster und/oder daraus bestehende Kompositmaterialien eingeschmolzen und/oder implantiert werden.

22. Verfahren nach dem Anspruch 21, **dadurch gekennzeichnet, dass** sich durch die Entladung der Plasmadüse auf der Trägeroberfläche bewegt und ein plastisches Dekor und/oder Relief gebildet werden.

23. Verfahren nach dem Anspruch 22, **dadurch gekennzeichnet, dass** das plastische Dekor und/oder Relief eine durchlaufende oder lokale oder punktförmige Geometrie aufweisen.

24. Verfahren nach dem Anspruch 22, **dadurch gekennzeichnet, dass** das plastische Dekor und/oder Relief als Mittel zur Bildung eines Distanzabstandes für die weitere Verbindung verwendet werden.

25. Verfahren nach einem der Ansprüche 20 bis 24, **dadurch gekennzeichnet, dass** der Träger aus der Gruppe der Materialien stammt: Glas, glasartige Material, Kunststoff, Polykarbonat, Erdstoff.

26. Verfahren nach dem Anspruch 1, **dadurch gekennzeichnet, dass** mit der Entladung der Plasmadüse auf der Trägeroberfläche ein planes und/oder plastisches Gebilde gebildet und/oder modifiziert wird.

27. Verfahren nach dem Anspruch 1, **dadurch gekennzeichnet, dass** mit der Entladung der Plasmadüse auf der Trägeroberfläche elektrisch leitende Schicht und/oder ein anderes elektrisch leitende geometrische Gebilde gebildet und/oder modifiziert wird.

28. Verfahren nach dem Anspruch 27, **dadurch gekennzeichnet, dass** der Präkursor in die Form des Aerosols übertragen wird, das von einem Inertgas mitgenommen wird und mit Hilfe der zusätzlichen dielektrischen Düse in den verspritzten Teil der Entladung der Plasmadüse oder in den Plasmakanal in dem Außenumfeld unter dem β-Winkel im Bereich von 15 - 90 ° gerichtet wird, wobei die Entladung der Plasmadüse im Argon in der freien Atmosphäre generiert wird und unter dem α-Winkel im Bereich von 15 - 90 ° auf der Trägeroberfläche verspritzt wird, wodurch auf der jeweiligen Trägeroberfläche Ornament, Dekor oder elektrisch nicht leitende oder halbleitende Schicht gebildet werden.

29. Verfahren nach dem Anspruch 28, **dadurch gekennzeichnet, dass** auf die gebildete nicht leitende oder halbleitende Schicht mit der Entladung der Plasmadüse gewirkt wird, die im Argon und zugleich in der inerten Umgebungsatmosphäre generiert wird, wodurch diese Schicht modifiziert wird und eine elektrisch hochleitende Schicht gebildet wird, die aus organisierten leitenden Clustern des reduzierten Metalls besteht, und die einen elektrischen Widerstand in der Größenordnung von 10⁻¹ bis 10³ Ω oder niedriger auf 1 cm der Schichtlänge aufweist.

30. Verfahren nach dem Anspruch 28, **dadurch gekennzeichnet, dass** auf die gebildete nicht leitende oder halbleitende Schicht mit der Entladung der Plasmadüse gewirkt wird, die im Argon und zugleich im kleinen Umfang der inerten Atmosphäre um die Entladung der Plasmadüse herum im Bereich über der Trägeroberfläche generiert wird, wobei Aerosol nur in den Raum zugeführt wird, der der Entladung nah ist, wodurch eine elektrisch leitende Schicht mit einem elektrischen Widerstand in der Größenordnung von 10⁻¹ bis 10³ Ω oder niedriger auf 1 cm Schichtlänge gebildet wird.

31. Verfahren nach dem Anspruch 1, **dadurch gekennzeichnet, dass** mit der Entladung der Plasmadüse auf Formaldehyd mit mindestens einem Präkursor und/oder Harz auf Formaldehydbasis und/oder auf weitere Makromoleküle auf Formaldehydbasis gewirkt wird, wodurch plasmachemische Polyreaktionen mit der minimierten Entstehung der gefährlichen Formaldehyd enthaltenden Dämpfe realisiert werden.

## Revendications

1. Procédé de la réalisation des polyréactions, des polyréactions plasma-chimiques, leur modifications et modifications macromoléculaires par la décharge au moins d'une buse à plasma avec une capillaire diélectrique du diamètre intérieur 0,01 - 10 mm qui est entourée par la cathode creuse connectée à la source d'énergie électromagnétique à puissance 1-10³ W/buse, d'amplitude de tension de l'ordre de 10² jusqu'à 10⁴ V avec la possibilité de sa modulation, d'amplitude du courant de l'ordre de 10⁻² jusqu'à 10⁰ A/buse et de gamme de fréquences de 1 MHz à micro-ondes, pendant qu'à proximité et/ou à la surface de la capillaire diélectrique se trouve éventuellement au moins une électrode supplémentaire à un potentiel électrique différent de la cathode creuse, pendant que l'argon coule par une capillaire diélectrique à une pression du milieu extérieur de 10³ à 10⁶ Pa, **caractérisé en ce qu'**on agit intentionnellement au moins sur un précurseur par la décharge qui se transforme en macromolécules, clusters, clusters organisés ou composite et/ou on agit activement au moins sur un constituant de la polyréaction chimique et les macromolécules générées, les clusters, les clusters organisés et les composites se modifient et/ou on agit directement sur les substances macromoléculaires, clusters, clusters organisés et composites qui continuent à se modifier et/ou se dégrader.

2. Procédé selon la revendication 1, **caractérisé en ce que** d'abord les polyréactions chimiques se réalisent en dehors de la décharge de la buse à plasma et on agit par la décharge de la buse à plasma soit simultanément avec les polyréactions chimiques en cours dès le début ou au cours des polyréactions chimiques ou on agit par la décharge de la buse à plasma sur des produits résultants des polyréactions chimiques immédiatement après avoir terminé les polyréactions chimiques ou avec un retard de temps après avoir terminé les polyréactions chimiques.

3. Procédé selon la revendication 1, **caractérisé en ce que** d'abord les polyréactions plasma-chimiques se réalisent par la décharge de la buse à plasma et avec leurs produits résultants les autres polyréactions chimiques se réalisent.

4. Procédé selon la revendication 1, **caractérisé en ce que** d'abord les polyréactions plasma-chimiques commencent par la décharge de la buse à plasma et les polyréactions chimiques commencent simultanément dès la phase déterminée des polyréactions plasma-chimiques qui sont au cours.

5. Procédé selon la revendication 4, **caractérisé en ce que** les polyréactions chimiques s'interrompent au cours de la phase déterminée.

6. Procédé selon la revendication 1, **caractérisé en ce qu'**on agit dans un seul cycle seulement par la décharge de la buse à plasma ce qui se réalisent uniquement les polyréactions plasma-chimiques.

7. Procédé selon la revendication 1, **caractérisé en ce que** d'abord les polyréactions plasma-chimiques se réalisent par la décharge de la buse à plasma après quoi on agit encore sur des produits finaux résultants par la décharge de la buse à plasma ce qui transforme les produits finals primaires.

8. Procédé selon la revendication 1, **caractérisé en ce que** d'abord les polyréactions plasma-chimiques se réalisent sans l'action de la décharge de la buse à plasma, après quoi on agit par la décharge de la buse à plasma en cours, immédiatement après la terminaison ou avec un retard de temps après la terminaison de lesdites polyréactions plasma-chimiques.

9. Procédé selon la revendication 1, **caractérisé en ce que** d'abord les polyréactions plasma-chimiques se réalisent par la décharge de la buse à plasma après quoi on agit par une autre décharge soit pendant les polyréactions plasma-chimiques initialisés par la décharge de la buse à plasma ou immédiatement après leur terminaison ou avec un retard de temps.

10. Procédé selon la revendication 1, **caractérisé en ce qu'**on agit intentionnellement par la décharge de la buse à plasma sur au moins un précurseur à l'état gazeux, liquide, sous la forme d'aérosol, d'émulsion, de gel, de suspension, de poudre, de débris, de couche et/ou de bloc de la substance à l'état solide, pendant que on agit sur les dernières directement dans la buse à plasma par la décharge de la buse à plasma et/ou dans le volume de la phase liquide et/ou dans le volume de la phase solide et/ou sur les différents supports et/ou dans les différents support.

11. Procédé selon la revendication 1, **caractérisé en ce qu'**on introduit une addition de travail dans la décharge de la buse à plasma ou à sa proximité, qui est en forme d'aérosol, substances solides ou friables, pendant que l'addition de travail est introduit dans la décharge par l'espace de la buse à plasma avant la décharge et/ou par l'espace de la décharge de la buse à plasma derrière une électrode creux et/ou ladit addition de travail s'introduit dans le milieu externe en dehors de la buse à plasma.

12. Procédé selon la revendication 1, **caractérisé en ce que** par l'action de la décharge de la buse à plasma se forme un gaz, un liquide, un aérosol, une émulsion, un gel, une suspension, un précipité, une poudre, un débris, une membrane, une couche, une fibre et/ou un bloc sur les parois de la capillaire diélectrique de la buse à plasma et/ou dans un milieu de travail s'écoulant à travers la buse à plasma et/ou dans un volume de la phase liquide ou solide et/ou sur des différents supports à l'extérieur de la buse à plasma et/ou dans des différents supports en dehors de la buse à plasma.

13. Procédé selon la revendication 1, **caractérisé en ce qu'**un gaz, un liquide, un aérosol, une émulsion, un gel, une suspension, une poudre, un débris, une membrane, une couche et/ou un bloc de la substance ou des mélanges de ceux-ci se forment en agissant de la décharge de la buse à plasma.

14. Procédé selon la revendication 1, **caractérisé en ce que** la décharge de la buse à plasma augmente l'énergie superficielle de substances macromoléculaires, de clusters ou de composites et/ou des perturbations dans les couches superficielles s'éliminent et/ou des qualités viscoélastiques de la couche superficielles ou des couches superficielles s'améliorent et/ou l'adhésion des liants et la solidité du joint collé augmente.

15. Procédé selon la revendication 1, **caractérisé en ce que** par la décharge de la buse à plasma se réalisent les polyréactions plasma-chimiques et les procédés de la dégradation et/ou de la dissociation et/ou le rongement et/ou l'évaporation de substances macromoléculaires d'origine et/ou de substances produits et/ou des effets secondaires indésirables des polyréactions chimiques et plasmo-chimiques.

16. Procédé selon la revendication 1, **caractérisé en ce que** les précurseurs et/ou les substances macromoléculaires et/ou les clusters et/ou les clusters organisés et/ou les composites s'appliquent sur le support par la décharge de la buse à plasma.

17. Procédé selon la revendication 16, **caractérisé en ce que** par la décharge de la buse à plasma les précurseurs et/ou les substances macromoléculaires et/ou les clusters et/ou les clusters organisés et/ou les composites, qui sont appliqués sur le support, se modifient simultanément par les polyréactions plasmo-chimiques

18. Procédé selon la revendication 17, **caractérisé en ce que** les précurseurs et/ou les substances macromoléculaires et/ou les clusters et/ou les clusters organisés et/ou les composites par les méthodes de physiques et/ou par les méthodes mécaniques s'étalent sur la surface du support et/ou se scellent par fusion dans la surface du support et/ou se refondent sur la surface du support par la décharge de la buse à plasma.

19. Procédé selon la revendication 18, **caractérisé en ce que** la surface du support pendant la formation de la substance composite se modifie en étalant sur la surface du support et/ou en scellant par fusion dans la surface du support et/ou en refondant sur la surface du support.

20. Procédé selon la revendication 1, **caractérisé en ce que** la surface du support se modifie par la décharge de la buse à plasma, pendant que la masse en fusion, qui se modifie, se crée sur cette surface.

21. Procédé selon la revendication 20, **caractérisé en ce que** les précurseurs et/ou les précurseurs modifiés et/ou les additions de travail dans le milieu de travail et/ou seulement le milieu de travail et/ou les substances macromoléculaires et/ou les clusters et/ou les clusters organisés et/ou les matériaux composites, composés de ceux-ci, se scellent par fusion et/ou implantent dans la masse en fusion sur la surface du support.

22. Procédé selon la revendication 21, **caractérisé en ce qu'**on bouge par la décharge de la buse de plasma sur la surface du support et on crée le décor plastique et/ou en relief.

23. Procédé selon la revendication 22, **caractérisé en ce que** le décor plastique et/ou en relief a une géométrie continue ou local ou ponctuelle.

24. Procédé selon la revendication 22, **caractérisé en ce que** le décor plastique et/ou en relief seront utilisés en tant qu'un moyen pour la création de la distance pour une autre liaison.

25. Procédé selon l'une quelconque des revendications 20 à 24 **caractérisé en ce que** le support appartient dans le groupe de matériaux : verre, matériaux vitraux, matière plastique, polycarbonate, roche.

26. Procédé selon la revendication 1, **caractérisé en ce que** la formation plane et/ou en relief se forme et/ou modifie par la décharge de la buse à plasma.

27. Procédé selon la revendication 1, **caractérisé en ce que** la couche électriquement conductrice et/ou une autre forme géométrique électriquement conductrice se forme et/ou modifie par la décharge de la buse à plasma sur la surface du support.

28. Procédé selon la revendication 27, **caractérisé en ce que** le précurseur est converti en forme d'un aérosol, qui est transporté dans un gaz inerte et ledit précurseur est dirigé par la buse diélectrique supplémentaire dans la partie pulvérisée de la décharge de la buse à plasma ou dans le canal de plasma dans le milieu extérieur sous angle α de 15 - 90 °, pendant que la décharge de la buse à plasma est générée dans l'argon à l'atmosphère libre en formant un angle de 15 - 90
° et cette-ci est pulvérisée sur la surface du support, moyennement quoi se forme un ornement, un décor ou une couche électriquement non conductrice ou semi-conductrice sur la surface du support.

29. Procédé selon la revendication 28, **caractérisé en ce qu'**on agit par la décharge de la buse à plasma générée dans l'argon et simultanément dans l'atmosphère inerte du milieu sur la couche conductrice ou semi-conductrice, moyennement quoi cette couche se modifie et une couche ultra électriquement conductrice se forme, qui est composée des clusters conducteurs organisés du métal réduit et ayant la résistance de l'ordre de 10⁻¹ à 10³ Ω ou inférieur sur 1 cm de la longueur de la couche.

30. Procédé selon la revendication 28, **caractérisé en ce qu'**on agit par la décharge de la buse à plasma, générée dans l'argon et simultanément dans le petit volume de l'atmosphère inerte autour de la décharge de la buse à plasma dans la zone sous la surface du support sur la couche électriquement non conductrice ou semi-conductrice, pendant que l'aérosol se conduit dans l'espace proche de la décharge, moyennement quoi une couche électriquement conductrice se forme, ayant la résistance de l'ordre de 10⁻¹ à 10³ Q ou inférieur sur 1 cm de la longueur de la couche.

31. Procédé selon la revendication 1, **caractérisé en ce qu'**on agit par la décharge de la buse à plasma sur le formaldéhyde avec au moins un précurseur et/ou une résine à la base du formaldéhyde et/ou sur des autres macromolécules à la base du formaldéhyde, moyennement quoi les polyréactions plasma-chimiques, avec une formation minimale des vapeurs dangereuses contenant le formaldéhyde, se réalisent.
